Europäisches Patentamt

European Patent Office

Office européen des brevets

(19)

(11) **EP 0 700 967 B1**

(12) **EUROPÄISCHE PATENTSCHRIFT**

(45) Veröffentlichungstag und Bekanntmachung des Hinweises auf die Patenterteilung:
**29.10.1997 Patentblatt 1997/44**

(51) Int Cl.6: **C08L 51/04**, C08L 25/12, C08L 33/12

(21) Anmeldenummer: **95113446.9**

(22) Anmeldetag: **26.08.1995**

(54) **Transparente, schlagzähe Formmassen mit hoher Fliessfähigkeit**

Transparent, impact-resistant moulding compounds having high fluidity

Masses de moulage transparentes, résistantes aux chocs et à haute fluidité

(84) Benannte Vertragsstaaten:
**BE CH DE ES FR GB IT LI NL**

(30) Priorität: **06.09.1994 DE 4431733**

(43) Veröffentlichungstag der Anmeldung:
**13.03.1996 Patentblatt 1996/11**

(73) Patentinhaber: **BASF Aktiengesellschaft
67063 Ludwigshafen (DE)**

(72) Erfinder:
• **Tiefensee, Kristin, Dr.
D-67368 Westheim (DE)**
• **Güntherberg, Norbert, Dr.
D-67346 Speyer (DE)**
• **Neumann, Rainer, Dr.
D-67112 Mutterstadt (DE)**

(56) Entgegenhaltungen:
EP-A- 0 062 223          EP-A- 0 591 804
EP-A- 0 599 067          EP-A- 0 604 843

**Beschreibung**

Die vorliegende Erfindung betrifft thermoplastische Formmassen, enthaltend eine Mischung aus im wesentlichen

(A) 15 bis 70 Gew.-% eines Methylmethacrylat-Polymerisates, erhältlich durch Polymerisation einer Mischung, bestehend im wesentlichen aus

(A1) 80 bis 93 Gew.-%, bezogen auf (A), Methylmethacrylat und

(A2) 7 bis 20 Gew.-%, bezogen auf (A), eines $C_1$-$C_8$-Alkylesters der Acrylsäure,

mit der Maßgabe, daß man die Viskositätszahl im Bereich von 55 bis 60 ml/g (gemessen an einer 0,5 gew.-%igen Lösung in Dimethylformamid bei 23°C) wählt, und

(B) 10 bis 50 Gew.-% eines Copolymerisates, erhältlich durch Polymerisation einer Mischung, bestehend im wesentlichen aus
(B1) 78 bis 88 Gew.-%, bezogen auf (B), eines vinylaromatischen Monomeren und
12 bis 22 Gew.-%, bezogen auf (B), eines Vinylcyanids,
mit der Maßgabe, daß man die Viskositätszahl im Bereich von 60 bis 80 ml/g (gemessen an einer 0,5 gew.-%igen Lösung in Dimethylformamid bei 23°C) wählt,

und

(C) 20 bis 50 Gew.-% eines Pfropfcopolymerisates, erhältlich im wesentlichen aus

(C1) 50 bis 80 Gew.-% eines Kerns, erhältlich durch Polymerisation eines Monomerengemisches, bestehend im wesentlichen aus

(C11) 50 bis 100 Gew.-% eines 1,3-Diens und

(C12) 0 bis 50 Gew.-% eines vinylaromatischen Monomeren,

und

(C2) 20 bis 50 Gew.-% einer Pfropfhülle, erhältlich durch Polymerisation eines Monomerengemisches in Gegenwart des Kerns (C1), bestehend im wesentlichen aus

(C21) 40 bis 100 Gew.-% eines $C_1$-$C_8$-Alkylesters der Methacryl- oder Acrylsäure und

(C22) 0 bis 60 Gew.-% eines vinylaromatischen Monomeren,

mit der Maßgabe, daß man die mittlere Teilchengröße ($d_{50}$) des Pfropfcopolymerisats im Bereich von 40 bis 500 nm wählt, und

(D) 0 bis 20 Gew.-% üblichen Zusatzstoffen, bezogen auf die Summe der Komponenten A, B und C, wobei sich die Gew.-Prozentangaben von A, B und C auf 100 addieren und die Differenz zwischen dem Brechungsindex der Komponente C und dem des Gemisches der Komponenten A und B oder dem des Gemisches der Komponenten A, B und D weniger als 0,005 beträgt.

Die EP-A 62 223 beschreibt transparente, schlagzähe, thermoplastische Formmassen aus einem harten Methylmethacrylat-Polymerisat, einem harten Styrol/Acrylnitril-Polymerisat und einem weichen Pfropfcopolymerisat von Alkyl (meth)acrylat und gegebenenfalls Styrol auf einen Kautschuk. Nachteilig an diesen Formmassen ist ihre Fließfähigkeit bei der Herstellung von Gegenständen mit langen und/oder komplizierten Fließwegen.

Der vorliegenden Erfindung lag daher die Bereitstellung weiterer thermoplastischer Formmassen auf der Basis von PMMA (Polymethylmethacrylat) und SAN (Styrol-Acrylnitril-Polymer) als Aufgabe zugrunde, die eine verbesserte Fließfähigkeit aufweisen, ohne Einbußen in den übrigen Eigenschaften (Optik, Wärmeformbeständigkeit usw.) hinnehmen zu müssen. Insbesondere sollte die Kerbschlagzähigkeit mindestens 2 kJ/m$^2$ und die Wärmeformbeständigkeit (Vicat B) sollte mindestens 87°C betragen.

Demgemäß wurden die eingangs definierten thermoplastischen Formmassen gefunden.

Des weiteren wurde ein Verfahren zu deren Herstellung, ihre Verwendung zur Herstellung von Formkörpern sowie Formkörper, hergestellt aus den erfindungsgemäßen thermoplastischen Formmassen, gefunden.

Die erfindungsgemäßen thermoplastischen Formmassen enthalten im wesentlichen

(A) 15 bis 70, vorzugsweise von 30 bis 60 Gew.-% eines Methylmethacrylat-Polymerisates, erhältlich durch Polymerisation einer Mischung, bestehend im wesentlichen aus

(A1) 80 bis 93, vorzugsweise von 85 bis 93 Gew.-%, bezogen auf (A), Methylmethacrylat und

(A2) 7 bis 20, vorzugsweise von 7 bis 15 Gew.-%, bezogen auf (A), eines $C_1$-$C_8$-Alkylesters der Acrylsäure,

mit der Maßgabe, daß man die Viskositätszahl im Bereich von 55 bis 60, vorzugsweise von 56 bis 58 ml/g (gemessen an einer 0,5 gew.-%igen Lösung in Dimethylformamid bei 23°C) wählt, und

(B) 10 bis 50, vorzugsweise von 10 bis 40 Gew.-% eines Copolymerisates, erhältlich durch Polymerisation einer Mischung, bestehend im wesentlichen aus

(B1) 78 bis 88, vorzugsweise von 78 bis 84 Gew.-%, bezogen auf (B), eines vinylaromatischen Monomeren und

12 bis 22, vorzugsweise von 16 bis 22 Gew.-%, bezogen auf (B), eines Vinylcyanids,

mit der Maßgabe, daß man die Viskositätszahl im Bereich von 60 bis 80, vorzugsweise von 65 bis 75 ml/g (gemessen an einer 0,5 gew.-%igen Lösung in Dimethylformamid bei 23°C) wählt,

und

(C) 20 bis 50, vorzugsweise von 30 bis 40 Gew.-% eines Pfropfcopolymerisates, erhältlich im wesentlichen aus

(C1) 50 bis 80, vorzugsweise von 55 bis 70 Gew.-% eines Kerns, erhältlich durch Polymerisation eines Monomerengemisches, bestehend im wesentlichen aus

(C11) 50 bis 100, vorzugsweise von 60 bis 80 Gew.-% eines 1,3-Diens und

(C12) 0 bis 50, vorzugsweise von 20 bis 40 Gew.-% eines vinylaromatischen Monomeren,

und

(C2) 20 bis 50, vorzugsweise von 30 bis 45 Gew.-% einer Pfropfhülle, erhältlich durch Polymerisation eines Monomerengemisches in Gegenwart des Kerns (C1), bestehend im wesentlichen aus

(C21) 40 bis 100, vorzugsweise von 50 bis 80 Gew.-% eines $C_1$-$C_8$-Alkylesters der Methacryl- oder Acrylsäure und

(C22) 0 bis 60, vorzugsweise von 20 bis 50 Gew.-% eines vinylaromatischen Monomeren,

mit der Maßgabe, daß man die mittlere Teilchengröße ($d_{50}$) des Pfropfcopolymerisats im Bereich von 40 bis 500, vorzugsweise von 50 bis 300 nm wählt, und

(D) 0 bis 20 Gew.-% üblichen Zusatzstoffen, vorzugsweise von 0 bis 10 Gew.-%, bezogen auf die Summe der Komponenten A, B und C, wobei sich die Gew.-Prozentangaben von A, B und C auf 100 addieren und die Differenz zwischen dem Brechungsindex der Komponente C und dem des Gemisches der Komponenten A und B oder dem des Gemisches der Komponenten A, B und D weniger als 0,005 beträgt.

Als $C_1$-$C_8$-Alkylester der Acrylsäure (Komponente (A2)) kann man Methylacrylat, Ethylacrylat, Propylacrylat, n-Butylacrylat, n-Pentylacrylat, n-Hexylacrylat, n-Heptylacrylat, n-Octylacrylat und 2-Ethylhexylacrylat sowie Mischungen davon einsetzen, vorzugsweise Methylacrylat, n-Butylacrylat, 2-Ethylhexylacrylat oder Mischungen davon, besonders bevorzugt Methylacrylat.

Die Methylmethacrylat-(MMA)-Polymerisate können durch Substanz-, Lösungs- oder Perlpolymerisation nach bekannten Methoden hergestellt werden (siehe beispielsweise Kunststoff-Handbuch, Band IX, "Polymethacrylate", Vieweg/Esser, Carl-Hanser-Verlag 1975) und sind im Handel erhältlich.

Als vinylaromatische Monomere (Komponente B1) kann man Styrol, ein- bis dreifach mit $C_1$-$C_8$-Alkylresten substituiertes Styrol wie p-Methylstyrol oder tert.-Butylstyrol sowie $\alpha$-Methylstyrol, bevorzugt Styrol, einsetzen.

Als Vinylcyanid (Komponente C1) kann man Acrylnitril und/oder Methacrylnitril, bevorzugt Acrylnitril einsetzen.

Außerhalb des oben angegebenen Bereiches der Zusammensetzung der Komponente B erhält man üblicherweise bei Verarbeitungstemperaturen über 240°C trübe Formmassen, die Bindenähte aufweisen.

Oberhalb des angegebenen Bereichs für die Viskositätszahl für B ändert sich die Fließfähigkeit nur unwesentlich, unterhalb des angegebenen Bereiches nimmt üblicherweise die Fließfähigkeit in einem gewünschten Rahmen zu, jedoch verschlechtert sich die Zähigkeit deutlich.

Die Copolymerisate B können nach allen bekannten Verfahren hergestellt werden, wie durch Substanz-, Lösungs-, Suspensions- oder Emulsionspolymerisation, bevorzugt durch Lösungspolymerisation (siehe GB-A 1 472 195).

Als 1,3-Dien (Komponente C11) des Kerns des Pfropfcopolymerisats (Komponente C1) kann man Butadien und/oder Isopren einsetzen.

Als vinylaromatisches Monomer (Komponente C12) kann man Styrol oder ein in $\alpha$-Stellung oder vorzugsweise am Kern mit einer (oder am Kern auch mehreren) $C_1$-$C_8$-Alkylgruppe(n), vorzugsweise Methyl, substituiertes Styrol einsetzen.

Bevorzugt weist der Kern des Pfropfcopolymerisats eine Glasübergangstemperatur von kleiner als 0°C auf.

Üblicherweise stellt man den Kern durch Emulsionspolymerisation her (siehe beispielsweise Encyclopedia of Polymer Science and Engineering, Vol. 1, S. 401 ff).

Als $C_1$-$C_8$-Alkylester der Methacryl- oder Acrylsäure (Komponente C21) verwendet man erfindungsgemäß Methylmethacrylat ("MMA"), Ethylmethacrylat, n-, i-Propylmethacrylat, n-Butylmethacrylat, Isobutylmethacrylat, sek.-Butylmethacrylat, tert.-Butylmethacrylat, Pentylmethacrylat, Hexylmethacrylat, Heptylmethacrylat, Octylmethylacrylat oder 2-Ethylhexylmethacrylat, wobei Methylmethacrylat besonders bevorzugt ist, sowie Mischungen dieser Monomere, Methylacrylat ("MA"), Ethylacrylat, Propylacrylat, n-Butylacrylat, Isobutylacrylat, sek.-Butylacrylat, tert.-Butylacrylat, Pentylacrylat, Hexylacrylat, Heptylacrylat, Octylacrylat oder 2-Ethylhexylacrylat, wobei n-Butylacrylat besonders bevorzugt ist, sowie Mischungen dieser Monomere untereinander als auch mit den Methacrylaten.

Als vinylaromatische Monomere (Komponente C22) kann man Styrol, ein- bis dreifach mit $C_1$-$C_8$-Alkylresten substituiertes Styrol wie p-Methylstyrol oder tert.-Butylstyrol sowie $\alpha$-Methylstyrol, bevorzugt Styrol, einsetzen.

Bei Verwendung von mehr als einem Monomeren für die Pfropfhülle kann ein Schalenaufbau erstrebenswert sein. Die verschiedenen Schalen können dabei verschiedene Zusammensetzungen besitzen. Dies wird erzielt, indem verschiedene Monomeren(mischungen) zu verschiedenen Zeiten bei der Polymerisation zugegeben werden.

Die Herstellung der Pfropfhülle (C2) erfolgt erfindungsgemäß in Gegenwart des Kerns (C1), beispielsweise nach dem Verfahren beschrieben in Encyclopedia of Polymer Ecience and Engineering, Vol. 1, S. 401 ff.

Das Pfropfcopolymerisat kann z.B. durch Sprühtrocknung oder durch Koagulation isoliert werden. Die erfindungsgemäßen Pfropfcopolymerisate weisen eine mittlere Teilchengröße ($d_{50}$) im Bereich von 40 bis 500 nm auf, bevorzugt von 50 bis 300 nm. Derartige Produkte sind handelsüblich.

Als Zusatzstoffe kommen bevorzugt solche in Betracht, die sich in den Komponenten A und B klar lösen. Beispielsweise seien genannt: Farbstoffe, Stabilisatoren, Schmiermittel und Antistatika.

Das Vermischen der Komponenten A, B, C und gewünschtenfalls D nimmt man erfindungsgemäß in der Schmelze bei Temperaturen im Bereich von 200 bis 300, vorzugsweise von 220 bis 280°C vor.

Eine Voraussetzung für die Transparenz der erfindungsgemäßen Formmassen ist, daß die Differenz zwischen dem Brechungsindex der (weichen) Komponente C und dem des Gemisches der beiden (harten) Komponenten A und B und ggf. der Füllstoffe D weniger als 0,005 beträgt. Der Brechungsindex des Gemisches der harten Komponenten A und B ergibt sich durch Linearkombination aus den Brechzahlen der Einzelkomponenten mit deren Gewichtsanteilen. Bei vorgegebenem Brechungsindex der Weichkomponente C wird der Brechungsindex der Hartkomponente durch geeignete Wahl des Verhältnisses A : B angeglichen. Eine weitere wesentliche Voraussetzung für die Unabhängigkeit der Transparenz von der Verarbeitungstemperatur ist die Einhaltung der angegebenen Zusammensetzung der Komponente B.

Aus den erfindungsgemäßen Formmassen können hauptsächlich durch Spritzgießen oder Blasen Formteile hergestellt werden. Man kann die Formmassen auch verpressen, kalandrieren, extrudieren oder vakuumformen. Sie können überall dort eingesetzt werden, wo die Fließfähigkeit der herkömmlichen transparenten Kunststoffe nicht genügt, beispielsweise bei Automobilheckleuchten, durchsichtigen Haushaltsgeräten, Spielwaren, Beschichtungen in Verbund mit den verschiedensten Werkstoffen.

Die Verarbeitungsbreite der erfindungsgemäßen, transparenten, thermoplastischen Mischungen oberhalb 200°C ist nicht durch träglichkeitserscheinungen eingeschränkt. Die Mischungen lassen sich zwischen 200 und 300°C ohne Einbußen in der Transparenz, ohne merkbare Vergilbung und ohne eine lästige Geruchsbildung verarbeiten. Im Spritzguß verarbeitete Formteile zeigen keinerlei denahtmarkierungen und zeichnen sich durch eine hohe Transparenz und einen hohen Oberflächenglanz aus.

Die mechanischen Eigenschaften entsprechen hochschlagzähen ABS-Einstellungen.

Beispiele

Die in den Beispielen und Vergleichsversuchen genannten Verhältnisse und Prozente beziehen sich auf das Gewicht.

Der Brechungsindex $n_D^{25}$ wurde mit einem Abbé-Refraktometer nach der Methode zur Messung der Brechungsindizes bei festen Körpern bestimmt (s. Ullmanns Encyklopädie der technischen Chemie, Band 2/1, S. 486, Herausgeber W. Foerst; Urban & Schwarzenberg, München-Berlin 1961).

Die Kerbschlagzähigkeit ($a_K$) wurde bei 23°C gemäß DIN 53453 bestimmt. Die Volumenfließfähigkeit (MVI 220/10) wurde gemäß DIN 53735 ermittelt. Die Wärmeformbeständigkeit (Vicat B) wurde gemäß DIN 53460 bestimmt.

Die optischen Eigenschaften wurden wie folgt ermittelt:

Transmission: analog zu DIN 5033 (Lichtart: D 65)

Streuung: analog zu ASTM D 1003

Die mittlere Teilchengröße und die Teilchengrößenverteilung wurden aus der integralen Massenverteilung bestimmt. Bei den mittleren Teilchengrößen handelt es sich in allen Fällen um das Gewichtsmittel der Teilchengrößen, wie sie mittels einer analytischen Ultrazentrifuge entsprechend der Methode von W. Scholtan und H. Lange, Kolloid-Z, und Z.-Polymere 250 (1972), Seiten 782 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gew.-% der Teilchen einen kleineren Durchmesser haben als der Durchmesser, der dem $d_{50}$-Wert entspricht. Ebenso haben dann 50 Gew.-% der Teilchen einen größeren Durchmesser als der $d_{50}$-Wert.

Für die Beispiele und Vergleichsbeispiele wurden die nachfolgend näher bezeichneten Polymerisate verwendet:

A1 Copolymerisat aus Methylmethacrylat (MMA) und Methylacrylat (MA) im Verhältnis 94:6 (Viskositätszahl (VZ) = 56 ml/g, $n_D^{25}$ = 1,4881);

A2 Copolymerisat aus MMA und MA im Verhältnis 91:9 (VZ = 58 ml/g, $n_D^{25}$ = 1,4877);

A3 Copolymerisat aus MMA und MA im Verhältnis 85:15 (VZ = 56 ml/g, $n_D^{25}$ = 1,4870);

B1 Copolymerisat aus Styrol (S) und Acrylnitril (AN) im Verhältnis 81:19 (VZ = 100 ml/g ($\triangleq$ Molekulargewicht von 250 000 g/mol, $n_D^{25}$ = 1,5783, Vergleichskomponente analog zu EP-A 62 223);

B2 Copolymerisat aus S und AN im Verhältnis 81:19 (VZ = 70 ml/g ($\triangleq$ Molekulargewicht von 150 000 g/mol), $n_D^{25}$ = 1,5783);

B3 Copolymerisat aus S und AN im Verhältnis 81:19 (VZ = 83 ml/g ($\triangleq$ Molekulargewicht von 195 000 g/mol), $n_D^{25}$ = 1,5783);

B4 Copolymerisat aus S und AN im Verhältnis 81:19 (VZ = 57 ml/g ($\triangleq$ Molekulargewicht von 112 000 g/mol), $n_D^{25}$ = 1,5783).

C Pfropfpolymerisat, hergestellt aus 45 Gew.-Teilen einer Mischung, bestehend aus 51 Gew.-Teilen MMA, 44 Gew.-Teilen Styrol und 5 Gew.-Teilen n-Butylacrylat, polymerisiert in Gegenwart von 55 Gew.-Teilen eines Kerns, erhältlich durch Polymerisation von 72 Gew.-Teilen Butadien und 28 Gew.-Teilen Styrol, $n_D^{25}$ = 1,5400).

Tabelle

| Nr. | Komponenten | | | | | | | | Zähigkeit $a_k/23°C$ [kJ/m$^2$] | Fließfähigkeit MVI 220/10 [g/10 min] | Vicat [°C] | Optik Transmission [%] | Haze [%] |
|---|---|---|---|---|---|---|---|---|---|---|---|---|---|
| | A1 | A2 | A3 | B1 | B2 | B3 | B4 | C | | | | | |
| 1 | 28,5 | | | 35,5 | | | | 36,0 | 2,5 | 2,3 | 89 | 90,0 | 1,5 |
| 2 | | 27,1 | | 36,9 | | | | 36,0 | 3,2 | 3,5 | 83 | 89,3 | 2,0 |
| 3 | | | 26,8 | 37,2 | | | | 36,0 | 2,8 | 4,3 | 82 | 89,5 | 1,8 |
| 4 | | 27,1 | | | | 36,9 | | 36,0 | 2,6 | 5,6 | 88 | 89,2 | 2,1 |
| 5 | | 27,1 | | | | | 36,9 | 36,0 | 1,5 | 9,3 | 87 | 90,1 | 1,7 |
| 6 | | 27,1 | | | 36,9 | | | 36,0 | 2,0 | 7,6 | 89 | 89,5 | 1,5 |
| 7 | | | 26,8 | | 37,2 | | | 36,0 | 2,1 | 10,4 | 88 | 89,7 | 1,7 |

Anm.: Nr. 1 bis 5 sind Vergleichsversuche, 6 und 7 sind erfindungsgemäße Versuche

**Patentansprüche**

1. Thermoplastische Formmassen, enthaltend eine Mischung aus im wesentlichen

(A) 15 bis 70 Gew.-% eines Methylmethacrylat-Polymerisates, erhältlich durch Polymerisation einer Mischung bestehend im wesentlichen aus

(A1) 80 bis 93 Gew.-%, bezogen auf (A), Methylmethacrylat und

(A2) 7 bis 20 Gew.-%, bezogen auf (A), eines $C_1$-$C_8$-Alkylesters der Acrylsäure,

mit der Maßgabe, daß man die Viskositätszahl im Bereich von 55 bis 60 ml/g (gemessen an einer 0,5 gew.-%igen Lösung in Dimethylformamid bei 23°C) wählt, und

(B) 10 bis 50 Gew.-% eines Copolymerisates, erhältlich durch Polymerisation einer Mischung bestehend im wesentlichen aus
(B1) 78 bis 88 Gew.-%, bezogen auf (B), eines vinylaromatischen Monomeren und
12 bis 22 Gew.-%, bezogen auf (B), eines Vinylcyanids,
mit der Maßgabe, daß man die Viskositätszahl im Bereich von 60 bis 80 ml/g (gemessen an einer 0,5 gew.-%igen Lösung in Dimethylformamid bei 23°C) wählt,

und

(C) 20 bis 50 Gew.-% eines Pfropfcopolymerisates, erhältlich im wesentlichen aus

(C1) 50 bis 80 Gew.-% eines Kerns, erhältlich durch Polymerisation eines Monomerengemisches, bestehend im wesentlichen aus

(C11) 50 bis 100 Gew.-% eines 1,3-Diens und

(C12) 0 bis 50 Gew.-% eines vinylaromatischen Monomeren,

und

(C2) 20 bis 50 Gew.-% einer Pfropfhülle, erhältlich durch Polymerisation eines Monomerengemisches in Gegenwart des Kerns (C1), bestehend im wesentlichen aus

(C21) 40 bis 100 Gew.-% eines $C_1$-$C_8$-Alkylesters der Methacryl- oder Acrylsäure und

(C22) 0 bis 60 Gew.-% eines vinylaromatischen Monomeren,

mit der Maßgabe, daß man die mittlere Teilchengröße ($d_{50}$) des Pfropfcopolymerisats im Bereich von 40 bis 500 nm wählt, und

(D) 0 bis 20 Gew.-% üblichen Zusatzstoffen, bezogen auf die Summe der Komponenten A, B und C, wobei sich die Gew.-Prozentangaben von A, B und C auf 100 addieren und die Differenz zwischen dem Brechungsindex der Komponente C und dem des Gemisches der Komponenten A und B oder dem des Gemisches der Komponenten A, B und D weniger als 0,005 beträgt.

2. Verfahren zur Herstellung von thermoplastischen Formmassen gemäß Anspruch 1, dadurch gekennzeichnet, daß man

(A) 15 bis 70 Gew.-% eines Methylmethacrylat-Polymerisates, erhältlich durch Polymerisation einer Mischung bestehend im wesentlichen aus

(A1) 80 bis 93 Gew.-%, bezogen auf (A), Methylmethacrylat und

(A2) 7 bis 20 Gew.-%, bezogen auf (A), eines $C_1$-$C_8$-Alkylesters der Acrylsäure,

mit der Maßgabe, daß man die Viskositätszahl im Bereich von 55 bis 60 ml/g (gemessen an einer 0,5 gew.-%igen Lösung in Dimethylformamid bei 23°C) wählt, und

(B) 10 bis 50 Gew.-% eines Copolymerisates, erhältlich durch Polymerisation einer Mischung bestehend im wesentlichen aus

(B1) 78 bis 88 Gew.-%, bezogen auf (B), eines vinylaromatischen Monomeren und

12 bis 22 Gew.-%, bezogen auf (B), eines Vinylcyanids,

mit der Maßgabe, daß man die Viskositätszahl im Bereich von 60 bis 80 ml/g (gemessen an einer 0,5 gew.-%igen Lösung in Dimethylformamid bei 23°C) wählt,

(C) 20 bis 50 Gew.-% eines Pfropfcopolymerisates, erhältlich im wesentlichen aus

(C1) 50 bis 80 Gew.-% eines Kerns, erhältlich durch Polymerisation eines Monomerengemisches, bestehend im wesentlichen aus

(C11) 50 bis 100 Gew.-% eines 1,3-Diens und

(C12) 0 bis 50 Gew.-% eines vinylaromatischen Monomeren,

und

(C2) 20 bis 50 Gew.-% einer Pfropfhülle, erhältlich durch Polymerisation eines Monomerengemisches in Gegenwart des Kerns (C1), bestehend im wesentlichen aus

(C21) 40 bis 100 Gew.-% eines $C_1$-$C_8$-Alkylesters der Methacryl- oder Acrylsäure und

(C22) 0 bis 60 Gew.-% eines vinylaromatischen Monomeren,

mit der Maßgabe, daß man die mittlere Teilchengröße ($d_{50}$) des Pfropfcopolymerisats im Bereich von 40 bis 500 nm wählt, und

(D) 0 bis 20 Gew.-% üblichen Zusatzstoffen, bezogen auf die Summe der Komponenten A, B und C, wobei sich die Gew.-Prozentangaben von A, B und C auf 100 addieren und die Differenz zwischen dem Brechungsindex der Komponente C und dem des Gemisches der Komponenten A und B oder dem des Gemisches aus den Komponenten A, B und D weniger als 0,005 beträgt, bei Temperaturen im Bereich von 200 bis 300°C mischt.

3. Verwendung der thermoplastischen Formmassen gemäß Anspruch 1 oder hergestellt gemäß Anspruch 2 zur Herstellung von Formkörpern.

4. Formkörper, erhältlich durch die Verwendung gemäß Anspruch 3.


## Claims

1. A thermoplastic molding material containing a blend comprising essentially

(A) from 15 to 70% by weight of a methyl methacrylate polymer obtainable by polymerizing a mixture consisting essentially of

(A1) from 80 to 93% by weight, based on (A), of methyl methacrylate and

(A2) from 7 to 20% by weight, based on (A), of a $C_1$-$C_8$-alkyl ester of acrylic acid,

with the proviso that the viscosity number is chosen in the range from 55 to 60 ml/g (measured in a 0.5% strength by weight solution in dimethylformamide at 23°C), and

(B) from 10 to 50% by weight of a copolymer obtainable by polymerizing a mixture consisting essentially of

EP 0 700 967 B1

(B1) from 78 to 88% by weight, based on (B), of a vinylaromatic monomer and

(B2) from 12 to 22% by weight, based on (B), of a vinyl cyanide,

with the proviso that the viscosity number is chosen in the range from 60 to 80 ml/g (measured in a 0.5% strength by weight solution in dimethylformamide at 23°C),

and

(C) from 20 to 50% by weight of a graft copolymer obtainable essentially from

(C1) from 50 to 80% by weight of a core obtainable by polymerizing a monomer mixture consisting essentially of

(C11) from 50 to 100% by weight of a 1,3-diene and

(C12) from 0 to 50% by weight of a vinylaromatic monomer

and

(C2) from 20 to 50% by weight of a graft shell obtainable by polymerizing a monomer mixture in the presence of the core (C1), consisting essentially of

(C21) from 40 to 100% by weight of a $C_1$-$C_8$-alkyl ester of methacrylic or acrylic acid and

(C22) from 0 to 60% by weight of a vinylaromatic monomer,

with the proviso that the median particle size ($d_{50}$) of the graft copolymer is chosen in the range from 40 to 500 nm, and

(D) from 0 to 20% by weight of conventional additives, based on the sum of the components A, B and C, the stated percentages by weight of A, B and C summing to 100 and the difference between the refractive index of component C and that of the mixture of components A and B or that of the mixture of components A, B and D being less than 0.005.

2. A process for the preparation of a thermoplastic molding material as claimed in claim 1, wherein

(A) from 15 to 70% by weight of a methyl methacrylate polymer obtainable by polymerizing a mixture consisting essentially of

(A1) from 80 to 93% by weight, based on (A), of methyl methacrylate and

(A2) from 7 to 20% by weight, based on (A), of a $C_1$-$C_8$-alkyl ester of acrylic acid,

with the proviso that the viscosity number is chosen in the range from 55 to 60 ml/g (measured in a 0.5% strength by weight solution in dimethylformamide at 23°C), and

(B) from 10 to 50% by weight of a copolymer obtainable by polymerizing a mixture consisting essentially of

(B1) from 78 to 88% by weight, based on (B), of a vinylaromatic monomer and

(B2) from 12 to 22% by weight, based on (B), of a vinyl cyanide,

with the proviso that the viscosity number is chosen in the range from 60 to 80 ml/g (measured in a 0.5% strength by weight solution in dimethylformamide at 23°C),

(C) from 20 to 50% by weight of a graft copolymer obtainable essentially from

9

(C1) from 50 to 80% by weight of a core obtainable by polymerizing a monomer mixture consisting essentially of

(C11) from 50 to 100% by weight of a 1,3-diene and

(C12) from 0 to 50% by weight of a vinylaromatic monomer

and

(C2) from 20 to 50% by weight of a graft shell obtainable by polymerizing a monomer mixture in the presence of the core (C1), consisting essentially of

(C21) from 40 to 100% by weight of a $C_1$-$C_8$-alkyl ester of methacrylic or acrylic acid and

(C22) from 0 to 60% by weight of a vinylaromatic monomer,

with the proviso that the median particle size ($d_{50}$) of the graft copolymer is chosen in the range from 40 to 500 nm, and

(D) from 0 to 20% by weight of conventional additives, based on the sum of the components A, B and C, the stated percentages by weight of A, B and C summing to 100 and the difference between the refractive index of component C and that of the mixture of components A and B or that of the mixture of components A, B and D being less than 0.005, are mixed at from 200 to 300°C.

3. Use of a thermoplastic molding material as claimed in claim 1 or prepared as claimed in claim 2 for the production of moldings.

4. A molding obtainable by the use as claimed in claim 3.


**Revendications**

1. Masses à mouler thermoplastiques contenant un mélange constitué essentiellement

(A) à concurrence de 15 à 70% en poids, par un polymère de méthacrylate de méthyle que l'on obtient par polymérisation d'un mélange constitué essentiellement

(A1) à concurrence de 80 à 93% en poids, rapportés à (A), par du méthacrylate de méthyle et

(A2) à concurrence de 7 à 20% en poids, rapportés à (A), par un ester alkylique en $C_1$-$C_8$ d'acide acrylique,

dans la mesure où l'on sélectionne l'indice de viscosité dans le domaine de 55 à 60 ml/g (mesuré dans une solution à 0,5% en poids dans du diméthylformamide à 23°C), et

(B) à concurrence de 10 à 50% en poids, par un copolymère que l'on obtient par polymérisation d'un mélange constitué essentiellement

(B1) à concurrence de 78 à 88% en poids, rapportés à (B), par un monomère vinylaromatique et

(B2) à concurrence de 12 à 22% en poids, rapportés à (B), par un acrylonitrile,

dans la mesure où l'on sélectionne l'indice de viscosité dans le domaine de 60 à 80 ml/g (mesuré dans une solution à 0,5% en poids dans du diméthylformamide à 23°C),

et

(C) à concurrence de 20 à 50% en poids, par un copolymère greffé que l'on obtient essentiellement à partir

(C1) à concurrence de 50 à 80% en poids, d'un noyau que l'on obtient par polymérisation d'un mélange de monomères constitué essentiellement

(C11) à concurrence de 50 à 100% en poids, par un 1,3-diène et

(C12) à concurrence de 0 à 50% en poids, par un monomère vinylaromatique, et

(C2) à concurrence de 20 à 50% en poids, d'une enveloppe de greffage que l'on obtient par polymérisation d'un mélange de monomères en présence du noyau (C1), mélange constitué essentiellement

(C21) à concurrence de 40 à 100% en poids, par un ester alkylique en $C_1$-$C_8$ d'acide méthacrylique ou d'acide acrylique, et

(C22) à concurrence de 0 à 60% en poids, par un monomère vinylaromatique,

dans la mesure où l'on sélectionne la granulométrie moyenne ($d_{50}$) du copolymère greffé dans le domaine de 40 à 500 nm, et

(D) à concurrence de 0 à 20% en poids, par des additifs habituels, rapportés à la somme des composants A, B et C, les indications en pour cent en poids de A, B et C s'additionnant pour donner 100 et la différence entre l'indice de réfraction du composant C et celui du mélange des composants A et B ou celui du mélange des composants A, B et D est inférieure à 0,005.

2. Procédé pour la préparation de masses à mouler thermoplastiques selon la revendication 1, caractérisé en ce qu'on mélange

(A) à concurrence de 15 à 70% en poids, un polymère de méthacrylate de méthyle que l'on obtient par polymérisation d'un mélange constitué essentiellement

(A1) à concurrence de 80 à 93% en poids, rapportés à (A), par du méthacrylate de méthyle et

(A2) à concurrence de 7 à 20% en poids, rapportés à (A), par un ester alkylique en $C_1$-$C_8$ d'acide acrylique,

dans la mesure où l'on sélectionne l'indice de viscosité dans le domaine de 55 à 60 ml/g (mesuré dans une solution à 0,5% en poids dans du diméthylformamide à 23°C), et

(B) à concurrence de 10 à 50% en poids, un copolymère que l'on obtient par polymérisation d'un mélange constitué essentiellement

(B1) à concurrence de 78 à 88% en poids, rapportés à (B), par un monomère vinylaromatique et

(B2) à concurrence de 12 à 22% en poids, rapportés à (B), par un acrylonitrile,

dans la mesure où l'on sélectionne l'indice de viscosité dans le domaine de 60 à 80 ml/g (mesuré dans une solution à 0,5% en poids dans du diméthylformamide à 23°C),

(C) à concurrence de 20 à 50% en poids, un copolymère greffé que l'on obtient essentiellement à partir

(C1) à concurrence de 50 à 80% en poids, d'un noyau que l'on obtient par polymérisation d'un mélange de monomères constitué essentiellement

(C11) à concurrence de 50 à 100% en poids, par un 1,3-diène et

(C12) à concurrence de 0 à 50% en poids, par un monomère vinylaromatique, et

(C2) à concurrence de 20 à 50% en poids, d'une enveloppe de greffage que l'on obtient par polymérisation d'un mélange de monomères en présence du noyau (C1), mélange constitué essentiellement

(C21) à concurrence de 40 à 100% en poids, par un ester alkylique en $C_1$-$C_8$ d'acide méthacrylique ou d'acide acrylique, et

(C22) à concurrence de 0 à 60% en poids, par un monomère vinylaromatique,

dans la mesure où l'on sélectionne la granulométrie moyenne ($d_{50}$) du copolymère greffé dans le domaine de 40 à 500 nm, et

(D) à concurrence de 0 à 20% en poids, des additifs habituels, rapportés à la somme des composants A, B et C, les indications en pour cent en poids de A, B et C s'additionnant pour donner 100 et la différence entre l'indice de réfraction du composant C et celui du mélange des composants A et B ou celui du mélange des composants A, B et D est inférieure à 0,005, à des températures dans le domaine de 200 à 300°C.

3. Utilisation des masses à mouler thermoplastiques selon la revendication 1 ou préparées conformément à la revendication 2, pour la fabrication de corps moulés.

4. Corps moulés que l'on obtient par l'utilisation selon la revendication 3.